# EUROPEAN PATENT APPLICATION

(11) **EP 1 777 240 A1**
(43) Date of publication of application: **25.04.2007**
(21) Application number: 05292245.7
(22) Date of filing: 24.10.2005
(51) Int. Cl.: C08F 212/08, C08F 4/52

(54) **Preparation of styrene-isoprene and of styrene isoprene ethylene copolymers**

(71) Applicant: TOTAL PETROCHEMICALS RESEARCH FELUY, 7181 Seneffe (Feluy) (BE); Centre National de la Recherche Scientifique (CNRS), 75016 Paris (FR)
(72) Inventor: Carpentier, Jean-François, 35690 Acigne (FR); Kirillov, Evgueni, 35000 Rennes (FR); Rodrigues, Anne-Sophie, 35700 Rennes (FR); Razavi, Abbas, 7000 Mons (BE)
(74) Representative: Roufosse, Micheline C.

(57) **Abstract**

This invention discloses the use in the copolymerisation of styrene and conjugated dienes such as isoprene or in the terpolymerisation of styrene, isoprene and ethylene, of a catalyst system based on allyl complexes of group 3 metals incorporating bridged cyclopentadienyl-fluorenyl ligands.

## Description

This invention relates to the field of copolymerisation of styrene and conjugated dienes such as isoprene or of styrene, ethylene and conjugated dienes using allyl complexes of group 3 metals incorporating bridged cyclopentadienyl-fluorenyl ligands.

sPS is a promising material for a large number of applications because of its high melting point of about 270 °C, high cristallinity, high modulus of elasticity, low dielectric constant and excellent resistance to moisture and chemicals. Nevertheless, a drawback that may limit its application scope is its brittleness. A possible way to improve toughness of sPS is to incorporate a comonomer such as ethylene or a diene. However, only few group 3 binary catalysts are reported to copolymerise styrene and conjugated dienes such as isoprene with a high activity, eventually yielding random copolymers as reported for example in Xu et al. (Xu, X.; Ni, X.; Shen, Z. Chinese Journal of Chemistry 2004, 22, 764) or in Zhanq et al. (Zhang, Q.; Ni, X.; Zhang, Y.; Shen, Z. Macromol. Rapid Commun. 2001, 22, 1493) or in Yin et al. (Jin, Y.; Wang, P.; Pei, F.; Cheng, G; Cui, L.; Song, C. Polymer, 1996, 37, 349). Controlled, highly stereospecific polymerisation of styrene mediated by organolanthanides has been achieved so far only with the binary system (C₅Me₄SiMe₃)Sc(CH₂SiMe₃)₂/[Ph₃C][B(C₆F₅)₄] described by Hou et al.(Luo, Y.; Baldamus, J.; Hou, Z. J . Am. Chem. Soc. 2004, 126, 13910) and single-component allyl complexes incorporating Cp-CR₂-Flu ligands described by Kirillov et al. ( Kirillov, E.; Lehmann, C. W.; Razavi, A.; Carpentier, J.-F. J. Am. Chem. Soc. 2004, 126, 12240.

It is an aim of this invention to provide a catalyst system that is active in the copolymerisation of styrene with conjugated dienes without co-catalyst.

It is another aim of this invention to provide a catalyst system that is active in the terpolymerisation of styrene with isoprene and ethylene without co-catalyst.

It is also an aim of the present invention to provide a catalyst system able to prepare styrene-conjugated diene or styrene-conjugated diene-ethylene (conjugated dienes such as isoprene) copolymers with highly syndiotactic polystyrene sequences.

It is a further aim of the present invention to provide a catalyst system able to prepare styrene-conjugated diene copolymers or styrene-ethylene-conjugated diene terpolymers having a large percentage of styrene.

Accordingly, the present invention discloses styrene-conjugated diene copolymers or styrene-conjugated diene-ethylene terpolymers, both with highly syndiotactic styrene blocks, said copolymers being prepared with a catalyst system comprising a metallocene catalyst component of general formula I

(Flu-R"-Cp)M(η³-C₃R'₅)(ether)ₙ (I)

- wherein Cp is a cyclopentadienyl, substituted or unsubstituted,
- wherein Flu is a fluorenyl, substituted or unsubstituted,
- wherein M is a metal Group 3 of the Periodic Table, including the lanthanides
- wherein R" is a structural bridge between Cp and Flu (9-position) imparting stereorigidity to the component,
- wherein ether is a donor solvent molecule,
- wherein (η³-C₃R'₅) is an allyl group wherein each R' is the same or different and is hydrogen or hydrocarbyl having from 1 to 20 carbon atoms or a silyl group or a polybutadienyl chain, and
- wherein n is 0, 1 or 2.

The catalyst system of the present invention does not require the use of an activating agent or co-catalyst.

The preferred conjugated diene is isoprene.

The substituents on the cyclopentadienyl are not particularly limited, they can be the same or different and they include hydrocarbyls having from 1 to 20 carbon atoms and silyl groups SiR*₃ wherein R* is hydrogen or hydrocarbyl having from 1 to 20 carbon atoms.

The substituents on the fluorenyl are not particularly limited, they can be the same or different and they include hydrocarbyls having from 1 to 20 carbon atoms and silyl groups SiR*₃.

The type of bridge present between the cyclopentadienyl and the fluorenyl in the above-described catalysts is not itself particularly limited. Typically R" comprises an alkylidene group having 1 to 20 carbon atoms, a germanium group (e.g. a dialkyl germanium group), a silicon group (e.g. a dialkyl silicon group), a siloxane group (e.g. a dialkyl siloxane group), an alkyl phosphine group or an amine group. Preferably, the substituent comprises a silyl radical or a hydrocarbyl radical having at least one carbon atom, to form the bridge, or a substituted or unsubstituted ethylenyl radical (e.g. -CH₂CH₂-). More preferably R" is isopropylidene (Me₂C), Ph₂C, ethylenyl (CH₂CH₂), Me₂Si, or Ph₂Si, and most preferably R" is Me₂C.

M is preferably yttrium, lanthanum or a member of the lanthanide series. Throughout this description, the term "lanthanide series" means the rare earth series of elements having atomic numbers of from 58 to 71. M is preferably yttrium, lanthanum, neodymium or samarium. Most preferably, M is neodymium.

The ether is generally a donor solvent molecule. Ether is preferably an acyclic or cyclic aliphatic ether, such as diethylether (Et₂O) or tetrahydrofurane (THF). Preferably the ether is tetrahydrofurane.

The most preferred catalyst component used in the present invention is (Cp-CMe₂-Flu)Nd(allyl)(THF).

### List of figures.

Figure 1 represents the crystal structure of (Flu-CMe₂-Cp)Nd(C₃H₅)(THF).

Figure 2 represents the crystal structure of [(3-tBu-C₅H₃)-CMe₂-Flu]Nd(allyl)(THF).

Figure 3 represents the styrene incorporation in a styrene-isoprene copolymer expressed in % as a function of the styrene concentration in the feed expressed in mol/L.

Figure 4 represents the molecular weight distribution of the styrene-isoprene copolymer of example 2, obtained by gel permeation chromatography.

Figure 5 represents the ¹³C NMR spectrum of the styrene-isoprene copolymer of example 2, obtained in CDCl₃ at a temperature of 25 °C.

Figure 6 represents the molecular weight distribution of the styrene-isoprene-ethylene copolymer of example 5, obtained by gel permeation chromatography.

Figure 7 represents the ¹³C NMR spectrum of the styrene-isoprene-ethylene copolymer of example 5, obtained in CDCl₃ at a temperature of 25 °C.

The early lanthanide complexes are prepared by salt elimination reaction of the dilithium salt [Flu-R"-Cp]Li₂ with one equivalent of LnCl₃(THF)ₓ as illustrated in Scheme 1 wherein R" is CMe₂.

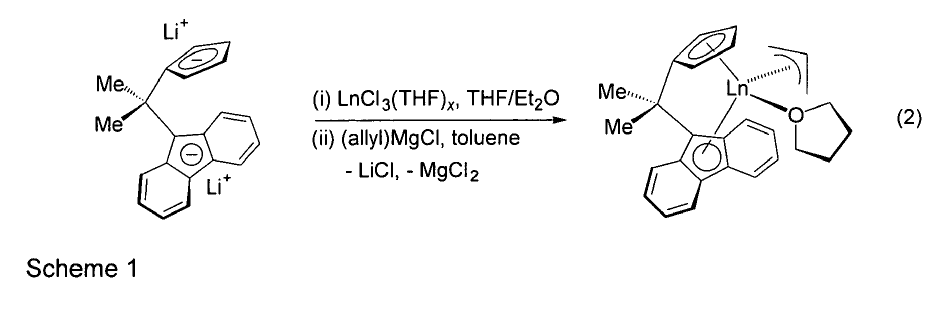

Preferably, Ln is lanthanum, neodymium or samarium, more preferably it is Nd.

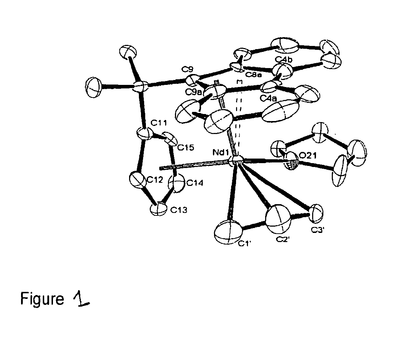

The crystal structure of the complex based on neodymium and determined by X-ray diffraction pattern is represented in Figure 1

The synthesis of substituted complexes is carried out directly from the modified (substituted) ligand (R'ₘC₅H₃)-R"-FluR'ₙ in order to prepare the corresponding allyl complex as shown for example in Scheme 2 wherein R" is CMe₂, Cp is substituted at the 3-position by a tert-butyl group, Flu is unsubstituted, metal M is Y, and ether is THF.

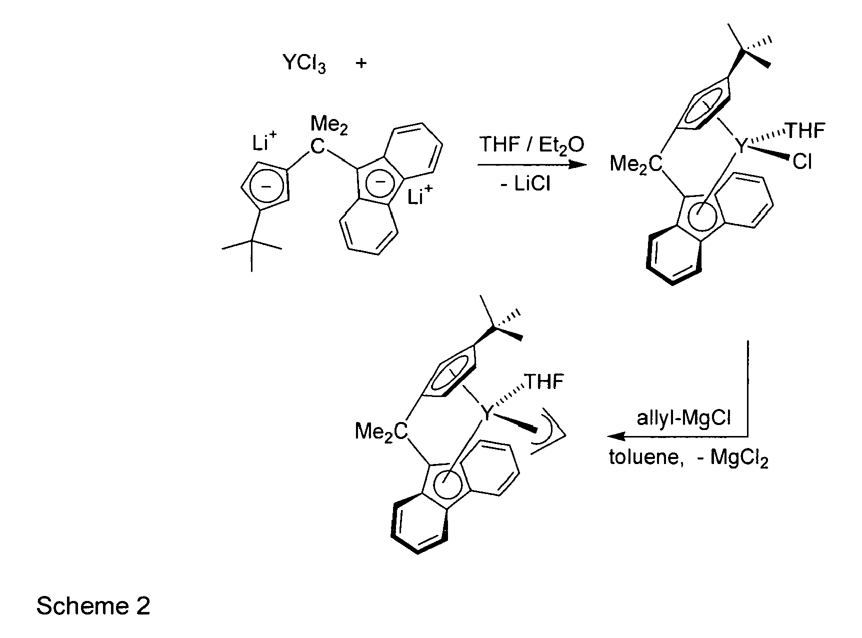

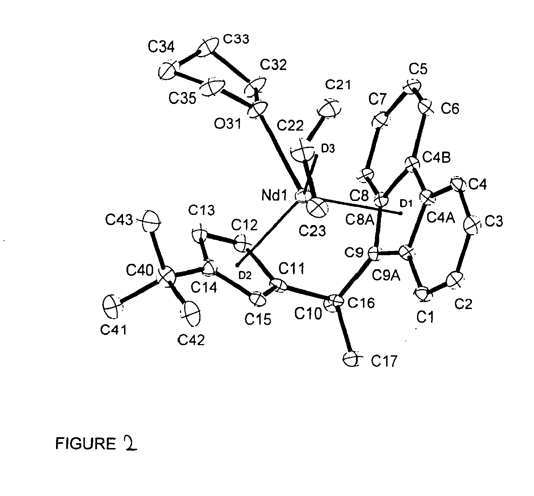

Figure 2 represents the crystal structure of [(3-tBu-C₅H₃)-CMe₂-Flu]Nd(allyl)(THF).

All these allyl complexes are active in the copolymerisation of styrene with conjugated dienes, or with conjugated dienes and ethylene, under mild conditions, and without activating agent or co-catalyst. The preferred conjugated diene is isoprene. The resulting copolymers have highly syndiotactic polystyrene sequences. Mild conditions imply that the polymerisation is carried out either in toluene solution or in bulk and at temperatures ranging from 10 to 120 °C, preferably from 15 to 80 °C and more preferably from 20 to 60 °C. The activities vary with the Group 3 metal selected and ranking them in order of increasing activity, the yttrium has the lowest activity, followed by lanthanum, samarium and neodymium that has the highest activity. It must be noted that the activity trend does not follow the order of metal atomic radii. It can be speculated that it reflects, in part, the stability of the complex under polymerisation conditions.

The allyl complexes of the present invention have little or no activity in the polymerisation of ethylene and the system deactivates rapidly. Complex (Cp-CMe₂-Flu)Nd(allyl)(THF) is moderately active for the polymerisation of isoprene but the polyisoprene formed does not have standard polyisoprene properties.

Interestingly, these same allyl complexes are very active in the copolymerisation of styrene and isoprene and in the terpolymerisation of styrene, isoprene and ethylene.

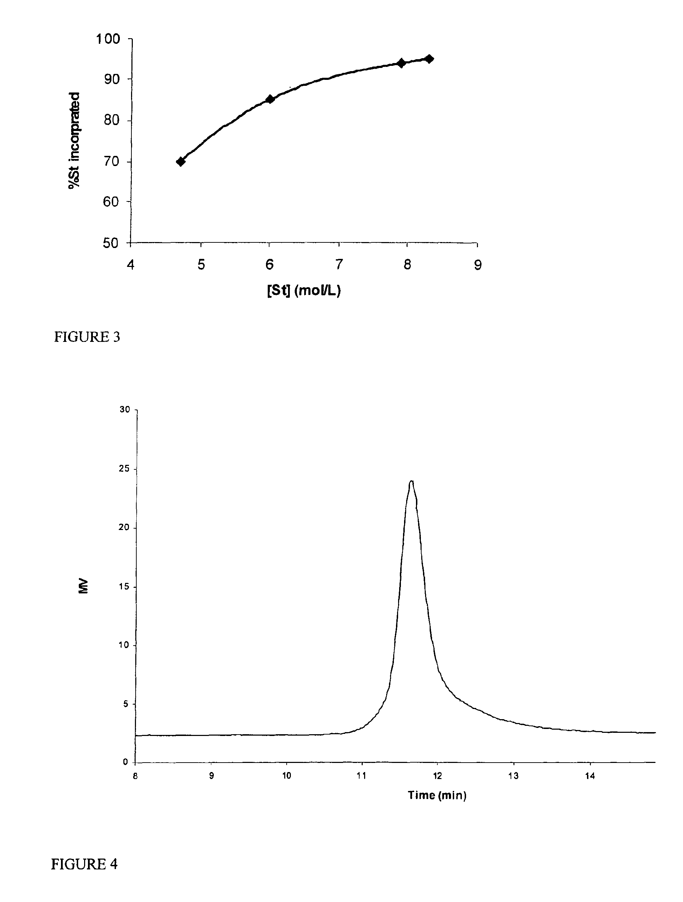

For the styrene-isoprene copolymers, activities of up to 1500 kg of copolymer per mole of catalyst per hour can be obtained for a polymerisation temperature of 60 °C. The styrene content in the copolymer increases with increasing styrene concentration in the feed as can be seen in Figure 3. The copolymers have a monomodal, very narrow molecular weight distribution ranging between 1.2 and 1.7. The molecular weight distribution is defined by the polydispersity index D that is the ratio Mw/Mn of the weight average molecular weight Mw over the number average molecular weight Mn. The molecular weights are determined by gel permeation chromatography. The number average molecular weight is of from 40000 to 120000 g/mol, and it increases with increasing monomer to catalyst ratio. Typical monomer to catalyst ratios range between 300 and 1500, the most preferred being of about 600. The ¹³C{¹H} NMR analysis of the copolymers reveals a blocky microstructure with syndiotactic polystyrene sequences and 1,4-trans-polyisoprene sequences. The high melting temperature Tm of the styrene-rich copolymers is another indication of the syndiotactic nature of the polystyrene segments: it is in the range of 215 to 250 °C. High values of the Young modulus further confirm this trend. Melting temperatures are determined by differential scanning calorimetry (DSC) and the Young modulus is determined by differential mechanical analysis (DMA).

For the styrene-isoprene-ethylene terpolymers, activities are moderate, of the order of about 400 kg of terpolymer per mole of catalyst per hour and they increase with increasing temperature. The monomer incorporation is also a function of the monomer concentration in the feed and can be adjusted to any desired level. The terpolymers have a monomodal, relatively narrow molecular weight distribution ranging between 1.1 and 3, indicative of a controlled behaviour. The number average molecular weight Mn is of from 35000 to 100000 g/mol, also increasing with increasing monomer to catalyst ratio. The ¹³C{¹H} NMR analysis of the terpolymers reveals the presence of 1,4-trans-polyisoprene sequences, syndiotactic polystyrene sequences and ethylene units randomly distributed along the polymer chain. The melting temperature, glass transition temperature and Young modulus can be tailored as desired by varying the styrene and isoprene content in the feed.

The present invention discloses a method for copolymerising styrene with conjugated dienes or with conjugated dienes and ethylene that comprises the steps of:
a) providing a catalyst system based on the metallocene component of formula

   (Flu-R"-Cp)M(n³-C₃R'₅)(ether)ₙ (I)

   wherein Cp is a cyclopentadienyl, substituted or unsubstituted, Flu is a fluorenyl, substituted or unsubstituted, M is a metal Group 3 of the Periodic Table, ether is a donor solvent molecule, R" is a structural bridge between Cp and Flu (9-position) imparting stereorigidity to the component, (n³-C₃R'₅) is an allyll group wherein each R' is the same or different and is hydrogen or an hydrocarbyl having from 1 to 20 carbon atoms or a silyl group or a polybutadienyl chain and n is 0, 1 or 2 and wherein no activating agent is required for activation;
b) injecting styrene monomer, isoprene comonomer and optionally ethylene comonomer;
c) maintaining under mild polymerisation conditions;
d) retrieving a styrene-conjugated diene copolymer or a styrene-conjugated diene -ethylene terpolymer with highly syndiotactic polystyrene blocks.

The copolymers and terpolymers of the present invention can be tuned to display desired properties by adapting the relative amounts of monomer and comonomer(s). As they have highly syndiotactic polystyrene sequences, they keep the characteristic properties of syndiotactic polystyrene such as for example high melting temperature, high crystallinity, excellent resistance to moisture and chemicals, low dielectric constant, high modulus of elasticity, but they have a much improved processability.

### Examples.

All manipulations were performed under a purified argon atmosphere using standard Schlenk techniques or in a glovebox. Solvents were distilled from Na/benzophenone (THF, Et₂O) and Na/K alloy (toluene, pentane) under nitrogen, degassed thoroughly and stored under nitrogen prior to use. Deuterated solvents (benzene-d₆, toluene-*d*₈, THF-d₈; >99.5% D, Eurisotop) were vacuum-transferred from Na/K alloy into storage tubes. Styrene and Isoprene (Acros) were dried over CaH₂ and distilled under reduced pressure prior to polymerisation experiments. Ethylene (Air liquide N35) was used without any further purification. The ligand CpH-CMe₂-FluH was prepared as previously reported in the literature.

NMR spectra of complexes and polymers were recorded on Bruker AC-200, AC-300 and AM-500 spectrometers in Teflon-valved NMR tubes at room temperature unless otherwise indicated. ¹H and ¹³C chemical shifts are reported vs. SiMe₄ and were determined by entryerence to the residual solvent peaks.

Room temperature Gel Permeation Chromatography (GPC) analysis of polymers was performed in THF with a Waters apparatus. High temperature GPC analyses were carried out in trichlorobenzene at 135 °C in the research center of Total Petrochemicals in Feluy. Differential Mechanical Analysis (DMA) was carried out at the University of Lorient.

### Synthesis of (Cp-CMe₂-Flu)Nd(C₃H₅)(THF) (1).

To a solution of 0.346 g (1.6 mmol) of FluH-CMe₂-CpH in 20 mL of ether at -10 °C were added under vigorous stirring 2 equivalents of n-BuLi (2.0 mL of a 1.6 M solution in hexane, 3.2 mmol). The mixture was warmed to room temperature (about 25 °C). The solution turned orange and after 3 h a yellow crystalline powder precipitated. To this suspension of the dilithium salt in ether was added a suspension of 0.632 g (1.6 mmol) of NdCl₃(THF)₂ in 20 mL of ether. Upon vigorous stirring and warming to room temperature, the mixture turned deep red. Volatiles were removed in vacuum to give a red powder. To this powder suspended in 20 mL of toluene were added 0.80 mL of a 3.0 M solution of allylmagnesium chloride in THF (1.6 mmol). The mixture was stirred for 8 h at room temperature. The resulting green-brown solution was filtered and volatiles were removed in vacuum. The residue was washed twice with 15 mL of pentane and dried under vacuum to give 0.72 g of a green-brown powder of compound 1 with a yield of 85%.

### Typical Procedure for Styrene-Isoprene Copolymerisation.

In the glovebox, a pre-weighted amount (20 to 60 mg) of allyl-lanthanide complex was added to styrene (3 to 10 mL) and isoprene (2 to 5 mL). Vigorous stirring at the appropriate temperature was immediately started. After a given time period, the Schlenk tube was opened to air and 1 mL of a 10% solution of HCl in methanol was added to quench the reaction. The polymer precipitated during the polymerisation reaction, was washed repeatedly with about 500 mL of methanol, filtered and dried in vacuum. The experimental details are displayed in Table I, and the results are displayed in Table II. The amount of Ln was of 0.05 to 0.15 mmol, the total volume of 10 mL and the pressure of 1 bar.

**TABLE I**

| Example | [St]/[Ln] | [St] mol/L | [lp] mol/L | T °C | Time min | Yield g | Activity kg/mol.h |
|---|---|---|---|---|---|---|---|
| 1 | 600 | 4.7 | 4.0 | 60 | 6 | 2.4 | 550 |
| 2 | 600 | 6.0 | 3.0 | 60 | 15 | 3.8 | 165 |
| 3 | 600 | 7.9 | 0.9 | 60 | 10 | 9.6 | 380 |
| 4 | 600 | 8.3 | 0.5 | 60 | 4 | 9.2 | 957 |

**TABLE II.**

| Example | Styrene^{a} Mol% | Mn kD | Mw/Mn | Tm °C | Tg1 °C | Tg2 °C | E MPa |
|---|---|---|---|---|---|---|---|
| 1 | 70 | 55 | 1.54 | - | - | 63 | 2081 (at 30°C) |
| 2 | 85 | 91 | 1.25 | -11 | 62 | 67 | 1190 (at 25 °C) |
| 3 | 94 | 63 | 1.62 | -8, 218 | 80 | - | Brittle film |
| 4 | >95 | ns | ns | 228 | - | - | - |

| | | | | | | | |
|---|---|---|---|---|---|---|---|
| ^{a}: The amount of incorporated styrene was determined by ¹H NMR. | | | | | | | |

The number average and weight average molecular weights, Mn and Mw, were determined by Gel Permeation Chromatography (GPC) in tetrahydrofuran (THF) versus polystyrene (PS) standards.

Melting and glass transition temperatures Tm and Tg1 were determined by Differential Scanning Calorimetry (DSC).
Glass transition temperature Tg2 and Young modulus E were determined by Differential Mechanical Analysis (DMA).
ns stands for not soluble at room temperature.

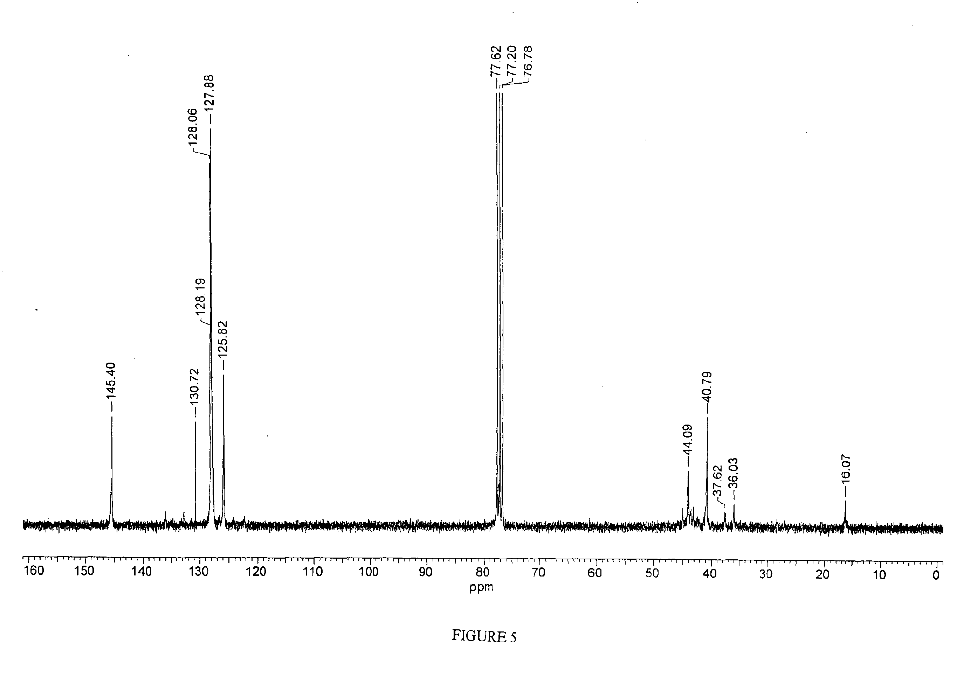

The molecular weight distribution of the styrene-isoprene copolymer of example 2 is displayed in Figure 4 and its ¹³C NMR spectrum in Figure 5.

### Typical Procedure for Styrene-Isoprene-Ethylene Terpolymerisation.

A 300 mL-glass reactor (TOP-Industrie) equipped with a mechanic stirrer rotating at speeds up to 1500 rpm was charged with a solution of styrene and isoprene in cyclohexane at 60 °C. The solution was saturated with ethylene (Air Liquide, N35) and kept under a constant pressure of 1 to 5 bars via a back-pressure regulator. A solution of 70 mg (0.133 mmol) of allyl-neodymium complex 1 in 2 mL of toluene was transferred via syringe into the reactor under stirring. The ethylene flow rate was monitored using a mass flowmeter (Aalborg, GFM17) connected to a totalising controller (KEP) acting as flow rate integrator. The reaction was quenched by addition of 2 mL of a 10% HCl methanol solution to the mixture. The resulting precipitate was filtered, washed with methanol, and dried under vacuum. The experimental details are displayed in Table III and the results are displayed in Table IV. All polymerisations were carried out at a temperature of 60 °C, with 0.05 to 0.15 mmol of Ln and a total volume of 60 °C.

**TABLE III**

| Example | [St]/[Ln] | [St] mol/L | [lp] mol/L | P bar | Time min | Yield g | Activity kg/mol.h |
|---|---|---|---|---|---|---|---|
| 5 | 600 | 2.2 | 2.2 | 5 | 60 | 7.2 | 33 |
| 6 | 600 | 7.9 | 0.9 | 1 | 15 | 8.9 | 244 |
| 7 | 600 | 4.1 | 0.5 | 4 | 15 | 25.6 | 235 |

**TABLE IV**

| Ex. | St^{a} mol% | Ip mol% | Et mol% | Mn kD | Mw/Mn | Tm °C | Tg1 °C | Tg °C | E MPa |
|---|---|---|---|---|---|---|---|---|---|
| 5 | 41 | 34 | 25 | 73 | 2.41 | -10 | - | 35 | 717 (at 20°C) |
| 6 | 97 | 3 | <5 | 41 | 2.84 | -6 | 76 | - | Brittle film |
| 7 | 71 | 6 | 23 | 83 | 1.18 | 219 | 56 | - | - |

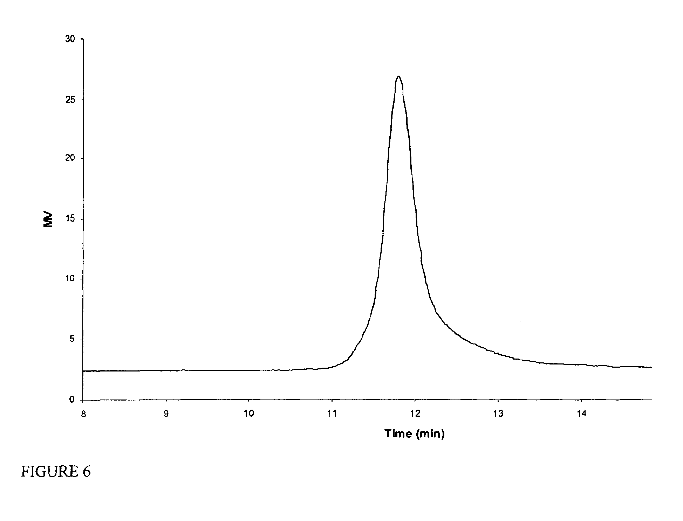

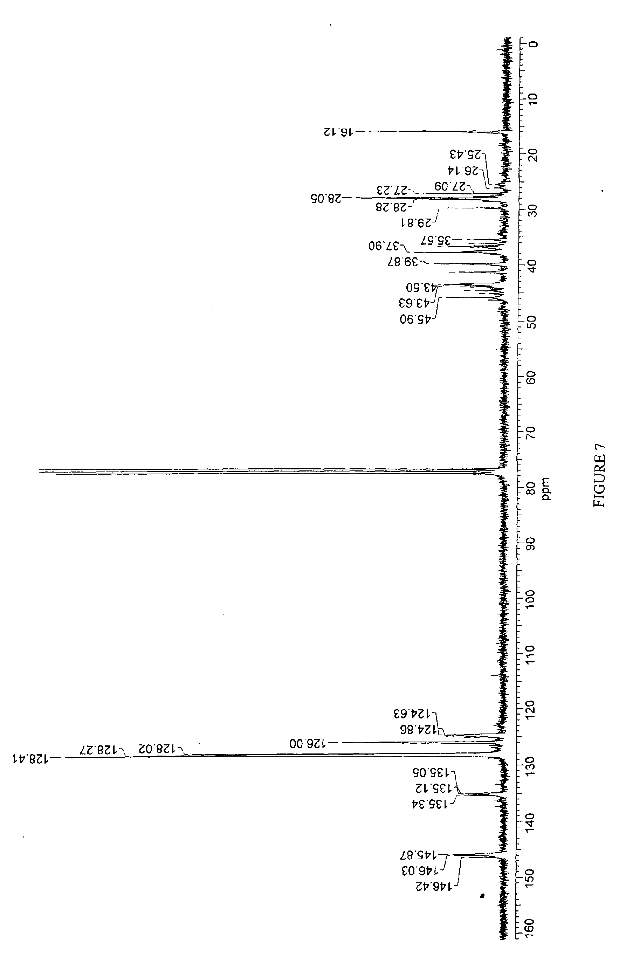

The molecular weight distribution of the styrene-isoprene-ethylene copolymer of example 5 is displayed in Figure 6 and its ¹³C NMR spectrum in Figure 7.

## Claims

1. A method for copolymerising styrene with conjugated diene and optionally with ethylene, the resulting polymers having highly syndiotactic styrene blocks, said method comprising the steps of:
a) providing a catalyst system based on the metallocene component of formula
(Flu-R"-Cp)M(n³-C₃R'₅)(ether)ₙ (I)
wherein
- Cp is a cyclopentadienyl, substituted or unsubstituted;
- Flu is a fluorenyl, substituted or unsubstituted;
- M is a metal Group 3 of the Periodic Table;
- ether is a donor solvent molecule;
- R" is a structural bridge between Cp and Flu (9-position) imparting stereorigidity to the component;
- (n³-C₃R'₅) is an allyll group wherein each R' is the same or different and is hydrogen or an hydrocarbyl having from 1 to 20 carbon atoms or a silyl group or a polybutadienyl chain and n is 0, 1 or 2;
- and wherein no activating agent is required for activation;
b) injecting styrene monomer, conjugated diene comonomer and optionally ethylene comonomer;
c) maintaining under polymerisation conditions;
d) retrieving a styrene-conjugated diene or a styrene-conjugated diene-ethylene copolymer having highly syndiotactic polystyrene blocks.

2. The method of claim 1 wherein M is selected from yttrium, lanthanum, neodymium or samarium.

3. The method of claim 1 or claim 2 wherein M is neodymium and R" is an isopropylidene bridge.

4. The method of any preceding claim wherein the fluorenyl is unsubstituted and the cyclopentadienyl is unsubstituted or substituted with one tert-butyl in position 3 or 4.

5. The method of any preceding claim wherein the copolymerisation is carried out under mild conditions at a temperature of from 15 to 80 °C.

6. The method of any preceding claim wherein the conjugated diene is isoprene.

7. Copolymer of styrene and conjugated diene obtainable by the method of any one of the preceding claims, said copolymer having at least 70% of syndiotactic styrene sequences, and 1,4-trans-polyisoprene sequences.

8. The copolymer of claim 7 having a monomodal molecular weight distribution of from 1.2 to 1.7.

9. Terpolymer of styrene, conjugated diene and ethylene obtainable by the method of any one of claims 1 to 6, said terpolymer having at least 40 % of syndiotactic styrene sequences, 1,4-trans-polyisoprene sequences and ethylene units randomly distributed in the polymer chain.

10. The terpolymers of claim 9 having a monomodal molecular weight distribution of from 1.1 to 3.

11. Use of the catalyst system as described in any one of claims 1 to 4 for preparing copolymers of styrene having highly syndiotactic styrene sequences.
